Europäisches Patentamt

European Patent Office

Office européen des brevets

(19)

(11) Veröffentlichungsnummer: **0 381 943**

**A2**

(12) **EUROPÄISCHE PATENTANMELDUNG**

(21) Anmeldenummer: **90100661.9**

(22) Anmeldetag: **13.01.90**

(51) Int. Cl.5: **C08L 59/00, //(C08L59/00, 33:04)**

(30) Priorität: **20.01.89 DE 3901605**

(43) Veröffentlichungstag der Anmeldung:
**16.08.90 Patentblatt 90/33**

(84) Benannte Vertragsstaaten:
**BE DE ES FR GB IT NL**

(71) Anmelder: **BASF Aktiengesellschaft
Carl-Bosch-Strasse 38
D-6700 Ludwigshafen(DE)**

(72) Erfinder: **Bohnet, Siegbert, Dr.
Collinistrasse 5
D-6800 Mannheim 1(DE)**
Erfinder: **McKee, Graham Edmund, Dr.
Kastanienweg 8
D-6940 Weinheim(DE)**
Erfinder: **Goerrissen, Heiner, Dr.
Im Zinkig 112
D-6700 Ludwigshafen(DE)**
Erfinder: **Saenger, Dietrich, Dr.
Lorcher Ring 16 a
D-6710 Frankenthal(DE)**

(54) **Polyoxymethylen-Formmasse.**

(57) Verstärkte oder unverstärkte Polyoxymethylen-Formmasse aus Polyoxymethylen-Homo- und/oder - Copolymerisaten, Zusatzstoffen und mindestens einem Additiv zur Verbesserung der Thermostabilität, worin als Additiv zur Verbesserung der Thermostabilität zumindest ein polymeres Material aus 62 bis 88 Gew.-% an einpolymerisiertem Methyl-, Ethyl- und/oder n-Propylmethacrylat, 2 bis 10 Gew.-% an einpolymerisiertem n-Propyl-, n-Butyl- und/oder n-Pentylacrylat und 10 bis 28 Gew.-% an einpolymerisiertem Acrylamid und/oder Methacrylamid in einer Menge von 0,01 bis 20 Gew.-% enthalten ist.

EP 0 381 943 A2

EP 0 381 943 A2

## Polyoxymethylen-Formmasse

Die vorliegende Erfindung betrifft eine neue verstärkte oder unverstärkte Polyoxymethylen-Formmasse aus Polyoxymethylen-Homo- und/oder -Copolymerisaten, Zusatzstoffen und mindestens einem Additiv zur Verbesserung der Thermostabilität.

Polyoxymethylen-Homo- und/oder -Copolymerisate sind seit langem bekannt. Die Polymerisate selbst zeichnen sich durch eine Anzahl ausgezeichneter Eigenschaften aus, so daß sie für die verschiedensten technischen Anwendungen geeignet sind. Insbesondere eignen sich die Polymerisate für die Herstellung von verstärkten oder unverstärkten Formmassen. Um deren Verarbeitbarkeit und thermische Stabilität zu verbessern, werden die Polyoxymethylen-Homo- und/oder -Copolymerisate bekanntermaßen mit Zusatzstoffen und mindestens einem Additiv zur Verbesserung der Thermostabilität vermischt.

Aus dem Stand der Technik gehen zahlreiche Additive hervor, welche zu einer Verbesserung der Thermostabilität von Polyoxymethylen-Formmassen führen sollen.

So wurden bereits in der US-A-2 993 025 synthetische Polyamide,

in der US-A-3 204 014 N-Vinylpyrrolidon/Acrylamid-Copolymere,

in der US-A-3 210 322 Carboxylgruppen enthaltende Polyamide, Polyurethane, substituierte Polyacrylamide, Polyvinylpyrrolidone und Hydrazine,

in der US-A-3 215 671 (Meth)acrylate und (Meth)acrylamide als Vernetzer,

in der US-A-4 464 435 Copolymere von Polyestern (Meth)acrylaten, (Meth)acrylamiden, Triallylcyanurat, Diallylphthalat, Vinylacetat und Divinylbenzol,

in der JP-B-14329/68 Copolymere von Acrylamid oder Acrylamidderivaten mit Acrylalkylestern, Vinylethern oder Vinylketonen oder Copolymere von Acrylamidderivaten und Styrol,

in der US-A-3 459 789 monomere Urethanmethylolether mit freien Hydroxylgruppen,

in der US-A-3 743 614 ein Gemisch aus einer Erdalkalimetallverbindung und einem monomeren Ester einer (Alkyl-hydroxyphenyl)-carbonsäure mit einem Polyol,

in der US-A-3 787 353 eine Verbindung der allgemeinen Formel $R(NHCOCH_2X)_n$, worin R eine Kohlenwasserstoffgruppe, X eine Cyano- oder Carbamoylgruppe und n eine ganze Zahl von 2 bis 6 bezeichnet,

in der US-A-3 960 984 ein Amidoligomer,

in der US-A-4 098 843 eine Dispersion eines Polyamids in einem Trägerharz,

in der JP-B-22669/68 Ethylen/Vinylacetat-Copolymere,

in der JP-B-48051/75 Epichlorhydrinpolymere und Metallseifen, Epoxyverbindungen oder organische Phosphite,

in der US-A-4 555 357 ein ethoxyliertes Carbonsäureamid,

in der EP-A-0 245 962 Polymere und/oder Oligomere, welche Hydroxygruppen und mindestens eine weitere funktionelle Gruppe mit einer stärkeren Lewis-Basizität als die Hydroxygruppe enthalten,

in der BE-A-722 268 Polyamide, Polyurethane, Polyharnstoffe, Polyvinylpyrrolidon, Poly(meth)acrylamid, Harnstoffderivate, Amide, Hydrazone, Semicarbazone und Alkylen-bis-phenole,

in der JP-B-17107/67 ein Copolymerisat von Acrylamid mit Styrol oder Vinylnaphthalin,

in der EP-A-0 270 278 ein Gemisch aus einem Superpolyamid und einer geringen Menge eines Übergangsmetallsalzes,

in der EP-A-0 270 279 ein Gemisch aus einem Superpolyamid und einer geringen Menge einer cyclischen Amidinverbindung und

in der DE-B-25 40 207 ein Fällungspolykondensat aus Formaldehyd und Melamin im Molverhältnis zwischen 1,2 : 1 und 10 : 1

als Additive zur Verbesserung der Thermostabilität vorgeschlagen.

Außerdem ist es bekannt, Vinylpolymere mit Amid- oder Lactamgruppen zu diesem zweck zu verwenden.

Allein schon die Vielzahl der bislang vorgeschlagenen Additive läßt erkennen, daß das Problem der Verbesserung der Thermostabilität von verstärkten oder unverstärkten Polyoxymethylen-Formmassen noch nicht zur vollen Zufriedenheit der Praxis gelöst werden konnte. Noch immer weisen bekannte Polyoxymethylen-Formmassen für einige Anwendungen eine nicht ausreichende thermische Stabilität auf, welche die Verarbeitung zu Formkörpern nachteilig beeinflußt und beispielsweise zu Ablagerungen am Formwerkzeug oder zur Verschlechterung der Entformbarkeit beiträgt und/oder beim späteren Gebrauch der Formkörper zu Verfärbungen und zur Verminderung der mechanischen Eigenschaften führt. Nachteilig ist ferner, daß in den bisher bekannten Polyoxymethylen-Formmassen noch Formaldehydaddukte enthalten sein können, welche bei der Verarbeitung bei erhöhten Temperaturen durch Formaldehydabspaltung zu Geruchsbelästigungen führen.

2

Aufgabe der vorliegenden Erfindung ist es, eine neue, verstärkte oder unverstärkte Polyoxymethylen-Formmasse zu finden, welche eine höhere Thermostabilität, eine geringere Verfärbungsneigung und, sofern vorhanden, einen erheblich geringeren Restformaldehydgehalt als die bislang bekannten Formmassen aufweist.

Überraschenderweise konnte diese Aufgabe durch die Verwendung speziell ausgewählter Additive gelöst werden.

Gegenstand der Erfindung ist somit eine verstärkte oder unverstärkte Polyoxymethylen-Formmasse aus

A) mindestens einem Polyoxymethylen-Homo- und/oder -Copolymerisat,

B) mindestens einem Zusatzstoff und

C) mindestens einem Additiv zur Verbesserung der Thermostabilität, welche dadurch gekennzeichnet ist, daß sie als Additiv (C) zumindest

$c_1$) ein polymeres Material, welches aus

$c_{11}$) 62 bis 88 Gew.-% an einpolymerisiertem Methyl-, Ethyl- und/oder n-Propylmethacrylat,

$c_{12}$) 2 bis 10 Gew.-% an einpolymerisiertem n-Propyl-, n-Butyl- und/oder Pentylacrylat und

$c_{13}$) 10 bis 28 Gew.-% an einpolymerisiertem Acrylamid und/oder Methacrylamid besteht, in einer Menge von 0,01 bis 20 Gew.-%, bezogen auf die Formmasse, enthält.

Im folgenden wird die neue verstärkte oder unverstärkte Polyoxymethylen-Formmasse der Kürze halber als "erfindungsgemäße Formmasse" bezeichnet.

Ein weiterer Gegenstand der Erfindung ist ein Verfahren zur Herstellung von Formkörpern und Folien aus Formmassen, welche die erfindungsgemäße Formmasse enthalten oder aus dieser bestehen.

Der für die Erfindung wesentliche Bestandteil der erfindungsgemäßen Formmasse ist das polymere Material ($c_1$).

Das polymere Material ($c_1$) liegt in der erfindungsgemäßen Formmasse als das einzige Additiv (C) oder neben anderen, üblichen und bekannten Additiven (C) zur Verbesserung der thermischen Stabilität vor. Unabhängig davon, ob das polymere Material ($c_1$) als das einzige Additiv (C) oder zusammen mit den üblichen und bekannten vorliegt, ist es in der erfindungsgemäßen Formmasse in einer Menge von 0,01 bis 20 Gew.-% enthalten. Hierbei empfiehlt es sich im allemeinen nicht, den Anteil des polymeren Materials ($c_1$) in der erfindungsgemäßen Formmasse über 20 Gew.-% hinaus zu erhöhen, weil die Vorteile, die hierdurch noch erzielt werden können, den höheren Verbrauch an polymerem Material ($c_1$) nicht mehr rechtfertigen. Außerdem kann es unter gewissen Umständen zu einer Entmischung des polymeren Materials ($c_1$) und der erfindungsgemäßen Formmasse kommen. Dagegen soll die Menge des polymeren Materials ($c_1$) in der erfindungsgemäßen Formmasse 0,01 Gew.-% nicht unterschreiten, weil ansonsten die durch das polymere Material ($c_1$) hervorgerufenen vorteilhaften technischen Effekte nicht immer den Ansprüchen der Praxis in vollem Umfang gerecht werden. Demgemäß handelt es sich bei dem Bereich von 0,01 bis 20 Gew.-% um ein Optimum, innerhalb dessen der Anteil des polymeren Materials ($c_1$) an der erfindungsgemäßen Formmasse variiert und den jeweils verwendeten sonstigen wesentlichen Bestandteilen der erfindungsgemäßen Formmasse angepaßt werden kann. Innerhalb dieses optimalen Bereichs ist derjenige von 0,05 bis Gew.-% bevorzugt, weil die erfindungsgemäße Formmasse mit einem solchen Gehalt an polymerem Material ($c_1$) besonders vorteilhaft ist und sich hervorragend für die Herstellung von Formkörpern und Folien eignet. Aus diesem erfindungsgemäß besonders bevorzugten Bereich ist wiederum derjenige von 0,08 bis 5 Gew.-% hervorzuheben, weil aus einem solchen Anteil an polymerem Material ($c_1$) ein ganz besonders vorteilhaftes anwendungstech nisches Eigenschaftsprofil der betreffenden erfindungsgemäßen Formmasse resultiert. Dies bedeutet, daß diese Menge an polymerem Material ($c_1$) hinsichtlich des Materialaufwandes einerseits und des hiermit erzielten vorteilhaften technischen Effekts andererseits hervorragend ausgewogen und daher erfindungsgemäß ganz besonders bevorzugt ist.

Das erfindungsgemäß zu verwendende polymere Material ($c_1$) besteht aus den Komponenten ($c_{11}$), ($c_{12}$) und ($c_{13}$). Bei der Komponente ($c_{11}$) handelt es sich um einpolymerisiertes Methyl-, Ethyl- und/oder n-Propylmethacrylat, von denen einpolymerisiertes Methylmethacrylat besonders bevorzugt ist. Bei der Komponente ($c_{12}$) handelt es sich um einpolymerisiertes n-Propyl-, n-Butyl- und/oder n-Pentylacrylat, von denen einpolymerisiertes n-Butylacrylat besonders bevorzugt ist. Bei der Komponente ($c_{13}$) handelt es sich um einpolymerisiertes Acrylamid und/oder Methacrylamid, von denen einpolymerisiertes Methacrylamid besonders bevorzugt ist.

Das erfindungsgemäß zu verwendende polymere Material ($c_1$) enthält die Komponente ($c_{11}$) in einer Menge von 62 bis 88, vorzugsweise 70 bis 80 und insbesondere 73 bis 77 Gew.-% die Komponente ($c_{12}$) in einer Menge von 2 bis 10, vorzugsweise 4 bis 6 und insbesondere 4,5 bis 5,5 und die Komponente ($c_{13}$) in einer Menge von 10 bis 28, vorzugsweise 16 bis 24 und insbesondere 18 bis 22 Gew.-%.

Erfindungsgemäß wird mit besonderem Vorteil das polymere Material ($c_1$) verwendet, welches aus 75 Gew.-% der Komponente ($c_{11}$), 5 Gew.-% der Komponente ($c_{12}$) und 20 Gew.-% der Komponente ($c_{13}$)

besteht.

Die erfindungsgemäßen polymeren Materialien $(c_1)$ sind entweder Copolymerisate, welche alle drei Komponenten $(c_{11})$, $(c_{12})$ und $(c_{13})$ einpolymerisiert enthalten, oder es sind Gemische, welche aus Homo- und/oder Copolymerisaten der Komponenten $(c_{11})$ untereinander, aus Homo- und/oder Copolymerisaten der Komponenten $(c_{12})$ untereinander und aus Homo- und/oder Copolymerisaten der Komponenten $(c_{13})$ untereinander bestehen. Selbstverständlich können für den erfindungsgemäßen Anwendungszweck auch polymere Materialien $(c_1)$ verwendet werden, welche sowohl aus den Copolymerisaten als auch aus den Polymerisatgemischen bestehen. Unabhängig davon, welches polymere Material $(c_1)$ verwendet wird, sind die Komponenten $(c_{11})$, $(c_{12})$ und $(c_{13})$ in den vorstehend genannten Mengen darin enthalten.

Erfindungsgemäß wird mit ganz besonderem Vorteil ein Copolymerisat aus $(c_{11})$ 75 Gew.-% an einpolymerisiertem Methylmethacrylat, $(c_{12})$ 5 Gew.-% an einpolymerisiertem n-Butylacrylat und $(c_{13})$ 20 Gew.-% an einpolymerisiertem Methacrylamid verwendet.

Die erfindungsgemäß zu verwendenden polymeren Materialien $(c_1)$ sind bekannte Verbindungen und werden nach den üblichen und bekannten Methoden der radikalisch initiierten Emulsions- oder Suspensions-Perl-Polymerisation in Wasser hergestellt. Wenn die Emulsionspolymerisationsmethode für die Herstellung der polymeren Materialien $(c_1)$ verwendet wird, dann kann die resultierende Emulsion der polymeren Materialien $(c_1)$ in Wasser im weiteren direkt für die Herstellung der erfindungsgemäßen Formmasse verwendet werden. Wenn die Suspensions-Perl-Polymerisationsmethode angewandt wird, wird das anfallende polymere Material $(c_1)$ isoliert, getrocknet, gemahlen und als Pulver für die Herstellung der erfindungsgemäßen Formmasse verwendet.

Der weitere wesentliche Bestandteil der erfindungsgemäßen Formmasse ist die Komponente (A). Hierbei handelt es sich um Polyoxymethylen-Homo-und/oder -Copolymerisate sowie deren Mischungen.

Beispiele geeigneter Komponenten (A) sind Homo- und Copolymerisate des Formaldehyds sowie des Trioxans mit cyclischen und/oder linearen Formalen, wie Butandiolformal oder Epoxiden wie Ethylen- oder Propylenoxid. Die Homopolymerisate haben in der Regel thermisch stabile Endgruppen wie Ester- oder Ethergruppen. Die Copolymerisate des Formaldehyds oder des Trioxans weisen vorteilhafterweise mehr als 50 % insbesondere mehr als 75 % Oxymethylengruppen auf. Besonders bewährt haben sich Copolymerisate, in welchen mindestens 0,1 Gew.-% Gruppen des Copolymeren enthalten sind, die mindestens zwei benachbarte Kohlenstoffatome in der Kette haben. Besondere technische Bedeutung haben Polyoxymethylene erlangt, die 1 bis 10 Gew.-% Comonomere enthalten. Solche Copolymerisate werden in an sich bekannter Weise durch kationische Copolymerisation von Trioxan mit geeigneten Comonomeren wie cyclischen Ethern oder Acetalen, z.B. Ethylenoxid, 1,3-Dioxolan, 1,3-Dioxan, 1,3-Dioxacycloheptan oder mit linearen Oligo- oder Polyformalen, wie Polydioxolan oder Polybutandiolformal hergestellt. In der Regel haben die verwendeten Polyoxymethylene ein zahlenmittleres Molekulargewicht $\overline{M}_n$ von 2000 bis 100000, vorzugsweise von 10000 bis 100000 und einen Schmelzflußindex (melt flow index, MFI) bei 190° und einer Auflagekraft von 21,17 N nach DIN 53 735 von 0,5 bis 200, vorzugsweise von 1 bis 70. Ganz besondere Bedeutung haben Polymerisate erlangt, welche aus Trioxan und 1 bis 10 Gew.-% Ethylenoxid, 1,3-Dioxolan oder Butandiolformal aufgebaut sind. Als zusätzliche Comonomere für Trioxan können noch Verbindungen mit mehreren polymerisierbaren Gruppen im Molekül, z.B. Alkylglycidylformale, Polyglykoldiglycidylether, Alkandioldiglycidylether oder Bis-(alkantriol)-triformale verwendet werden. Üblicherweise werden sie in einer Menge von 0,05 bis 5 Gew.-%, vorzugsweise 0,1 bis 2 Gew.-%, bezogen auf die Gesamtmonomermenge angewendet.

In der erfindungsgemäßen Formmasse sind die Komponenten (A) in einer Menge von, bezogen auf das Gewicht der Komponenten (A), (B) und (C), 40 bis 99,99, vorteilhafterweise 70 bis 99,99 und insbesondere 95, bis 99,9 Gew.-% enthalten.

Der weitere wesentliche Bestandteil der erfindungsgemäßen Formmasse ist mindestens ein Zusatzstoff (B). Je nach dem wie das vorteilhafte Eigenschaftsprofil der erfindungsgemäßen Formmasse weiter variiert werden soll, werden ein oder mehrere Zusatzstoffe (B) verwendet.

Die Zusatzstoffe (B) können den unterschiedlichsten Verbindungsklassen entstammen und die unterschiedlichsten technischen Effekte bewirken. Als Zusatzstoffe (B) kommen alle diejenigen Zusatzstoffe in Betracht, welche üblicherweise für die Verwendung in verstärkten oder unverstärkten Polyoxymethylen-Formmassen vorgesehen sind. Beispiele geeigneter Zusatzstoffe (B) sind Costabilisatoren, verstärkend wirkende Füllstoffe wie Glasfasern, Kohlefasern, Wollastonite, Kreide, Talkum, Ruß und Kaliumtitanate, Nukleierungsmittel, Antistatika, Licht- und Flammschutzmittel, Gleit- und Schmiermittel, Weichmacher, Antioxidantien, Pigmente, Farbstoffe, optische Aufheller, innere Trennmittel, Schlagzähmodifier wie Polyurethankautschuke oder Pfropfkautschuke auf der Basis von einpolymerisierten (Meth)Acrylsäureestern, einpolymerisiertem (Meth)Acrylnitril und/oder einpolymerisiertem Butadien sowie Polymere wie Polyalkylenterephthalate.

EP 0 381 943 A2

Diese Zusatzstoffe können in der erfindungsgemäßen Formmasse in den unterschiedlichsten Mengen vorhanden sein, wobei sich im Einzelfall die betreffende Menge des jeweils verwendeten Zusatzstoffs (B) danach richtet, welchen speziellen nützlichen technischen Effekt man hiermit erzielen will. Zweckmäßigerweise werden die Zusatzstoffe (B) in der erfindungsgemäßen Formmasse in den vom Stand der Technik her bekannten üblichen Mengen verwendet, wobei Mengen von 0,01 bis 40 Gew.-%, bezogen auf das Gewicht der Komponenten (A), (B) und (C), besonders vorteilhaft sind.

Methodisch weist die Herstellung der erfindungsgemäßen Formmasse keine Besonderheiten auf, sondern sie wird nach den üblichen und bekannten Methoden der Herstellung von Formmassen erhalten. Hierzu können die Komponenten (A), (B) und (C) der erfindungsgemäßen Formmasse einzeln oder in Form von einer oder von mehreren vorgefertigten Mischungen einer geeigneten Mischvorrichtung zugeführt und dort bei Temperaturen von 0 bis 260°C gemischt werden. Hierbei ist es vorteilhaft, die Komponenten (A), (B) und (C) der erfindungsgemäßen Formmasse bei Temperaturen von 0 bis 150°C, vorzugsweise von 0 bis 50°C intensiv zu vermischen, die hierbei resultierende vorgefertigte Mischung in einen Extruder, vorzugsweise einen Mehrfachwellenextruder, welcher gegebenenfalls mit einer Entgasungsvor richtung ausgestattet ist, einzubringen und bei Temperaturen von 150 bis 260, vorzugsweise 200 bis 250°C aufzuschmelzen, die resultierende Schmelze zu entgasen und zu extrudieren und hiernach aus dem betreffenden Extruder auszutragen. Die in dieser Weise erhaltene erfindungsgemäße Formmasse kann nach dem Abkühlen granuliert werden. Die resultierenden Granulate können zwischengelagert oder direkt zur Herstellung von Folien oder Formkörpern verwendet werden, wobei für die Herstellung der Folien und Formkörper aus der erfindungsgemäßen Formmasse die üblichen und bekannten Methoden des Blasformens und des Spritzgießens in Betracht kommen. Die erfindungsgemäße Formmasse weist im Vergleich zu bekannten Formmassen neben guten mechanischen Eigenschaften eine deutlich verbesserte Temperaturbeständigkeit und eine geringere Verfärbungstendenz sowie einen verringerten Restformaldehydgehalt auf. Die erfindungsgemäße Formmasse eignet sich daher hervorragend für die Herstellung von Folien oder Formkörpern. Die Formkörper finden mit Vorteil Verwendung in der Fahrzeug-, Elektrogeräte- und Elektronikindustrie.

Beispiel 1

Die Herstellung des erfindungsgemäß zu verwendenden Copolymerisats ($c_1$) der Zusammensetzung 75 Gew.-% Methylmethacrylat, 5 Gew.-% n-Butylacrylat und 20 Gew.-% Methacrylamid nach der Emulsionspolymerisationsmethode;

Herstellvorschrift:

In einem Rührkessel wurden 4,9 kg Wasser, 14,718 g Kaliumstearat und 3,019 g Natriumhydrogencarbonat vorgelegt und auf 75°C erhitzt. Zu der erhitzten Vorlage wurden unter Rühren im Verlauf von 2 Stunden gleichzeitig
(i) eine Lösung von 4,415 g Kaliumperoxodisulfat in 216 g Wasser (Zulauf 1) und
(ii) 1,104 kg Methylmethacrylat und 73,6 g n-Butylacrylat (Zulauf 2) hinzugegeben.
Zwanzig Minuten nach Beendigung des Zulaufs 2 wurden im Verlauf zweier Stunden
(iii) 294,37 g Methacrylamid in 1,7 kg Wasser (Zulauf 3) zum Reaktionsgemisch hinzugegeben.
Die nach einer Nachreaktionszeit von 2 Stunden resultierende Emulsion eines Feststoffgehalts von 18 Gew.-% wurde direkt für die Herstellung der erfindungsgemäßen Formmasse verwendet.

Ein Teil des in der Suspension enthaltenen Copolymerisats ($c_1$) wurde isoliert, getrocknet und analysiert. Die mit Hilfe der chemischen Elementaranalyse ermittelten Werte stimmten mit den theoretisch berechneten Werten sehr gut überein. Die Glastemperatur $T_g$ des Copolymerisats ($c_1$) wurde mit Hilfe der Differentialthermoanalyse (DSC) zu 145°C bestimmt. Bei 215°C wies das Copolymerisat ($c_1$) nach 7 Minuten einen Gewichtsverlust von 5 %, nach 32 Minuten einen Gewichtsverlust von 7,5 % und nach 2,5 Stunden einen Gewichtsverlust von 10 Gew.-% auf.

Beispiel 2

Die Herstellung des erfindungsgemäß zu verwendenden Copolymerisats ($c_1$) der Zusammensetzung 75 Gew.-% Methylmethacrylat, 5 Gew.-% n-Butylacrylat und 20 Gew.-% Methacrylamid nach der Suspensions-Perl-Polymerisationsmethode;

Herstellvorschrift:

Es wurde im wesentlichen wie in Beispiel 1 verfahren, nur daß die Mengen der Monomeren und des Polymerisationsinitiators, des Kaliumstearats und des Natriumhydrogencarbonats erhöht wurden, so daß ein Reaktionsansatz mit einem Feststoffgehalt von 35 Gew.-% resultierte.

Das hierbei erhaltene Copolymerisat ($c_1$) in der Form kleiner Perlen wurde vom Wasser abgetrennt, gewaschen, getrocknet, gemahlen und als Pulver für die Herstellung der erfindungsgemäßen Formmasse verwendet.

Die mit Hilfe der chemischen Elementaranalyse ermittelte Zusammensetzung des Copolymerisats ($c_1$) stimmte sehr gut mit den theoretisch berechneten Werten überein. Seine durch Differentialthermoanalyse ermittelte Glastemperatur $T_g$ lag bei 142 °C, und der Gewichtsverlust bei 215 °C entsprach demjenigen des Copolymerisats ($c_1$) aus Beispiel 1.

Beispiele 3 bis 11 und Vergleichsversuche V1 bis V5

Herstellung und Eigenschaften erfindungsgemäßer (Beispiele 3 bis 11) und nicht erfindungsgemäßer (Vergleichsversuche V1 bis V5) Formmassen;

Allgemeine Versuchsvorschrift:

Bei den Beispielen 3 bis 7 und den Vergleichsversuchen V1 bis V5 wurde jeweils ein thermisch nicht abgebautes Polyoxymethylen-Copolymerisat (MFI = 9-10 g/10 Minuten; ermittelt nach DIN 53 735 bei 190 °C und einer Auflagekraft von 21,17 N), welches aus einer Mischung aus 97,3 Gew.-% Trioxan und 2,7 Gew.-% Butandiolformal hergestellt worden war und welches noch ungefähr 5 Gew.-% nicht umgesetztes Trioxan und ungefähr 3 Gew.-% thermisch instabiles Formaldehydaddukt enthielt, mit unterschiedlichen Mengen an Zusatzstoffen (B) und Additiven (C) zur thermischen Stabilisierung in einem Trockenmischer bei einer Temperatur von 23 °C gemischt. Die resultierenden vorgefertigten Mischungen wurden bei einer Temperatur von 23 °C in einen Doppelschneckenextruder mit Entgasungsvorrichtung (Typ ZSK 28 der Firma Werner und Pfleiderer, Stuttgart) eingebracht, bei 180 bis 230 °C homogenisiert und entgast, wonach das homogenisierte Gemisch durch eine Düse als Strang ausgepreßt und granuliert wurde.

Zur Prüfung der Thermostabilität und Verfärbungsneigung wurden bestimmt:

GV($N_2$): Der Gewichtsverlust in % einer Probe aus 2 g Granulat bei zwei-, vier- und/oder achtstündigem Erhitzen auf 222 °C unter Stickstoff;

GV(Luft): Gewichtsverlust in % einer Probe aus 1 g Granulat bei zwei-, vier- und/oder achtstündigem Erhitzen auf 222 °C unter Luft;

Farbe: Farbe der Rückwaage nach achtstündigem GV(Luft)-Test

Die Tabelle 1 gibt einen Überblick über die hergestellten erfindungsgemäßen und nicht erfindungsgemäßen Formmassen. Die Ergebnisse der vorstehend genannten Tests werden in der Tabelle 2 zusammengefaßt.

Tabelle 1

Die stoffliche Zusammensetzung der erfindungsgemäßen (Beispiele 3 bis 11) und der nicht erfindungsgemäßen (Vergleichsversuche V1 bis V5) Formmassen

| Beispiel Nr. | Komponente (A) | Zusammensetzung in Gew.-% Komponenten (B) und/oder (C) | | | polymeres Material $(c_1)$ |
|---|---|---|---|---|---|
| 3 | Ultraform® N 2320 von Ultraform GmbH (98,65) | Irganox® 259[a] von Ciba Geigy (0,3) | Polyamid[b] (monocapped) (0,05) | – | Copolymerisat $(c_1)$ gemäß Beispiel 1 (1) |
| 4 | wie Beispiel 3 | wie Beispiel | wie Beispiel | – | Copolymerisat $(c_1)$ gemäß Beispiel 2 (1) |
| 5 | Ultraform® N 2320 von Ultraform GmbH (99,55) | Irganox® 259[a] von Ciba Geigy (0,3) | Polyamid[b] (monocapped) (0,05) | – | Copolymerisat $(c_1)$ gemäß Beispiel 1 (0,1) |
| 6 | wie Beispiel 4 | wie Beispiel 4 | wie Beispiel 4 | – | Copolymerisat $(c_1)$ gemäß Beispiel 2 (0,1) |
| 7 | Ultraform® N 2320 von Ultraform GmbH (99,35) | Irganox® 259[a] von Ciba Geigy (0,35) | Melamin-Formalde-hydkondensat gem. DE-B-25 40 207 (0,15) | Magnesiumsili-kat Ambosol® von Hoechst (0,05) | Copolymerisat $(c_1)$ gemäß Beispiel 1 (0,1) |

EP 0 381 943 A2

Tabelle 1 Fortsetzung

Die stoffliche Zusammensetzung der erfindungsgemäßen (Beispiele 3 bis 11) und der nicht erfindungsgemäßen (Vergleichsversuche V1 bis V5) Formmassen

| Beispiel Nr. | Komponente (A) | Zusammensetzung in Gew.-% Komponenten (B) und/oder (C) | | | polymeres Material $(c_1)$ |
|---|---|---|---|---|---|
| 8 | Ultraform® N 2320 von Ultraform GmbH (99,40) | Irganox® 259[a] von Ciba Geigy (0,35) | Melamin-Formalde- hydkondensat gem. DE-B-25 40 207 (0,15) | – | Copolymerisat $(c_1)$ gemäß Beispiel 1 (0,1) |
| 9 | wie Beispiel 8 | wie Beispiel 8 | wie Beispiel 8 | – | Copolymerisat $(c_1)$ gemäß Beispiel 2 (0,1) |
| 10 | Ultraform® N 2320 von Ultraform GmbH (99,55) | Irganox® 259[a] von Ciba Geigy (0,35) | – | – | Copolymerisat $(c_1)$ gemäß Beispiel 1 (0,1) |
| 11 | wie Beispiel 10 | wie Beispiel 10 | – | – | Copolymerisat $(c_1)$ gemäß Beispiel 2 (0,1) |

EP 0 381 943 A2

Tabelle 1 Fortsetzung

Die stoffliche Zusammensetzung der erfindungsgemäßen (Beispiele 3 bis 11) und der nicht erfindungsgemäßen (Vergleichsversuche V1 bis V5) Formmassen

| Vergleichs-versuch | Komponente (A) | Zusammensetzung in Gew.-%<br>Komponenten (B) und/oder (C) | | | polymeres Material ($c_1$) |
|---|---|---|---|---|---|
| V1 | Ultraform® N 2320<br>von Ultraform GmbH<br>(99,65) | Irganox® 259[a]<br>von Ciba Geigy<br>(0,3) | Polyamid[b]<br>(monocapped)<br>(0,05) | – | – |
| V2 | Ultraform® N 2320<br>von Ultraform GmbH<br>(98,65) | Irganox® 259[a]<br>von Ciba Geigy<br>(0,3) | Polyamid[b]<br>(monocapped)<br>(0,05) | Styrol-Methacrylamid<br>(80:20)-Copolymerisat<br>analog JP-B-14329/68<br>(1) | – |
| V3 | Ultraform® N 2320<br>von Ultraform GmbH<br>(99,45) | Irganox® 259[a]<br>von Ciba Geigy<br>(0,35) | Melamin-Formalde-<br>hydkondensat gem.<br>DE-B-25 40 207<br>(0,15) | Magnesiumsilikat<br>Ambosol® von<br>Hoechst<br>(0,05) | – |
| V4 | Ultraform® N 2320<br>von Ultraform GmbH<br>(99,25) | Irganox® 259[a]<br>von Ciba Geigy<br>(0,35) | Melamin-Formalde-<br>hydkondensat gem.<br>DE-B-25 40 207<br>(0,15) | Magnesiumsilikat<br>Ambosol® von<br>Hoechst<br>(0,05)<br>Formaldehydfänger [c]<br>(0,2) | – |

EP 0 381 943 A2

Tabelle 1 Fortsetzung

Die stoffliche Zusammensetzung der erfindungsgemäßen (Beispiele 3 bis 11) und der nicht erfindungsgemäßen (Vergleichsversuche V1 bis V5) Formmassen

| Vergleichs-versuch | Komponente (A) | Zusammensetzung in Gew.-% Komponenten (B) und/oder (C) | | | polymeres Material $(c_1)$ |
|---|---|---|---|---|---|
| V5 | Ultraform® N 2320 von Ultraform GmbH | Irganox® 259[a] von Ciba Geigy | Melamin-Formalde-hydkondensat gem. DE-B-25 40 207 | Formaldehydfänger [c] | – |
| | (99,3) | (0,35) | (0,15) | (0,2) | |

[a] Hexan-1,6-diol-bis [3-(4-hydroxy-3,5-di-tert.-butyl-phen-1-yl)-propionat];

[b] Polyamid, dessen Aminoendgruppe mit Propionsäure acyliert wurde;

[c] 1,4-Bis(4,6-diamino-s-triazin-2-yl)-piperazin;

EP 0 381 943 A2

EP 0 381 943 A2

Tabelle 2

| Thermische Stabilität der erfindungsgemäßen (Beispiele 1 bis 11) und der nicht erfindungsgemäßen (Vergleichsversuche V1 bis V5) Formmassen | | | | | | | |
|---|---|---|---|---|---|---|---|
| Beispiel Nr. | Thermische Stabilität (ausgedrückt durch den Gew.-Verlust in %) | | | | | | Farbe nach 8h an der Luft |
| | GV ($N_2$) | | | GV (Luft) | | | |
| | 2h | 4h | 8h | 2h | 4h | 8h | |
| 3 | 0,02 | - | - | 1,37 | - | - | hellgelb |
| 4 | 0,03 | - | - | 1,25 | - | - | hellgelb |
| 5 | 0,11 | - | - | 1,40 | - | - | hellgelb |
| 6 | 0,10 | - | - | 1,45 | - | - | hellgelb |
| 7 | 0,07 | 0,25 | 0,56 | 0,71 | 3,53 | 11,83 | farblos |
| 8 | 0,04 | 0,24 | 0,47 | 0,79 | 2,85 | 10,57 | farblos |
| 9 | 0,09 | 0,26 | 0,52 | 0,81 | 2,95 | 10,72 | farblos |
| 10 | 0,06 | 0,38 | 0,40 | 0,78 | 2,90 | 9,49 | farblos |
| 11 | 0,05 | 0,40 | 0,50 | 0,83 | 3,02 | 10,05 | farblos |
| Vergleichsversuch | | | | | | | |
| V1 | 0,70 | - | - | 4,92 | - | - | bräunlich |
| V2 | 0,56 | - | - | 3,22 | - | - | bräunlich |
| V3 | 0,08 | 0,35 | 1,00 | 0,80 | 3,37 | 18,21 | bräunlich |
| V4 | 0,14 | 0,39 | 0,97 | 1,10 | 6,09 | 18,02 | bräunlich |
| V5 | 0,17 | 0,46 | 1,00 | 0,99 | 4,35 | 16,75 | bräunlich |

11

Wie die Tabelle 2 zeigt, sind die erfindungsgemäßen Formmassen in ihrer thermischen Stabilität und hinsichtlich ihrer Neigung, sich beim Erhitzen zu verfärben (vgl. die Beispiele 1 bis 11), den nicht erfindungsgemäßen Formmassen (vgl. die Vergleichsversuche V1 bis V5) eindeutig überlegen. Völlig überraschend war es, daß die erfindungsgemäß zu verwendenden Copolymerisate $(c_1)$ für sich alleine einen ebenso großen, wenn nicht gar stärkeren stabilisierenden Effekt aufweisen, wie (als) ihre Kombination mit Additiven (C) zur thermischen Stabilisierung, welche vom Stand der Technik her bekannt sind.

Demgemäß weisen auch die aus den erfindungsgemäßen Formmassen (vgl. die Beispiele 3 bis 11) durch Spritzguß hergestellten erfindungsgemäßen Formkörper und die durch Blasformen hergestellten Folien eine erheblich bessere Farbe und, bedingt durch den breiteren Verarbeitungsspielraum, eine bessere Abformung auf als Formkörper und Folien, welche aus nicht erfindungsgemäßen Formmassen (vgl. die Vergleichsversuche V1 bis V5) hergestellt wurden.

Beispiele 12 und 13, die Vergleichsversuche V6 bis V8

Messungen des Restformaldehydgehalts mit dem "Lion-Formaldehyd-Meter";

Allgemeine Versuchsvorschrift:

Für die Beispiele 12 und 13 sowie die Vergleichsversuche V6 bis V8 wurde eine Spritzgußmaschine mit einem Doppelschneckenentgasungsextruder und einem Spritzgußwerkzeug verwendet. Diese Spritzgußmaschine war mit einem "Lion-Formaldehyd-Meter" der Firma Lion Laboratories Ltd., Cardiff, Großbritannien, ausgerüstet. Die Nachweisgrenze des "Lion-Formaldehyd-Meters" lag bei 0,3 ppm Formaldehyd. Mit Hilfe dieses Meßgerätes wurden der Formaldehydgehalt über der Schmelze der erfindungsgemäßen (Beispiele 12 und 13) und der nicht erfindungsgemäßen (Vergleichsversuche V6 bis V8) Formmassen sowie der Formaldehydgehalt der Atmosphäre in der Box gemessen, in welche die aus den betreffenden Formmassen hergestellten Formkörper nach ihrer Abformung im Spritzgußwerkzeug hineinfielen.

Es wurden die folgenden Formmassen bei 200° C extrudiert und verspritzt:

Beispiel 12

99,15 Gew.-% Ultraform® N 2320 von Ultraform GmbH,
0,35 Gew.-% Irganox® 259 von Ciba Geigy,
0,3 Gew.-% Ultraform® E 3320 von Ultraform GmbH und
0,2 Gew.-% Copolymerisat $(c_1)$ gemäß Beispiel 1;

Beispiel 13

Wie Beispiel 12, nur daß anstelle des Copolymerisats $(c_1)$ gemäß Beispiel 1 dasjenige gemäß Beispiel 2 verwendet wurde;

Vergleichsversuch V6

99,3 Gew.-% Ultraform® N 2320 von Ultraform GmbH,
0,35 Gew.-% Irganox® 259 von Ciba Geigy,
0,3 Gew.-% eines Melamin-Formaldehyd-Kondensates gemäß DE-B-25 40 207 und
0,05 Gew.-% Magnesiumsilikat Ambosol® von Hoechst;

Vergleichsversuch V7

99,6 Gew.-% Ultraform® N 2320 von Ultraform GmbH,
0,35 Gew.% Irganox® 259 von Ciba Geigy und
0,05 Gew.-% Magnesiumsilikat Ambosol® von Hoechst;

Vergleichsversuch V8

99,15 Gew.-% Ultraform® N 2320 von Ultraform GmbH,
0,35 Gew.-% Irganox® 259 von Ciba Geigy,
0,3 Gew.-% Ultraform® E 3320 von Ultraform GmbH und
0,2 Gew.-% 1,4Bis(4,6-diamino-s-triazin-2-yl)-piperazin.
Die in dieser Weise ermittelten Werte für den Restformaldehydgehalt sind in der Tabelle 3 zusammengestellt.

Tabelle 3

Die Messungen des Restformaldehydgehalts mit dem "Lion-Formaldehyd-Meter"

| Beispiel Nr. | Formaldehydgehalt in ppm | |
|---|---|---|
| | in der Box | über der Schmelze |
| 12 | 0,6 – 1,1 | 1,1 |
| 13 | 0,4 – 0,9 | 0,9 |
| Vergleichsvers. | | |
| V6 | 1,5 | 4,6 |
| V7 | 1,6 | 1,1 |
| V8 | 0,6 | 0,8 |

Wie die Tabelle 3 deutlich macht, bewirken die erfindungsgemäß zu verwendenden Copolymerisate ($c_1$) zusätzlich zu ihren sonstigen besonderen unerwarteten technischen Effekten auch noch eine deutliche Verringerung des Restformaldehydgehalts, welche sich durchaus in der Wirkung mit dem speziell als Formaldehydfänger entwickelten 1,4-Bis(4,6-diamino-s-triazin-2-yl)-piperazin vergleichen läßt.

**Ansprüche**

1. Verstärkte oder unverstärkte Polyoxymethylen-Formmasse mit verbesserter thermischer Stabilität aus
A) mindestens einem Polyoxymethylen-Homo- und/oder -Copolymerisat,
B) mindestens einem Zusatzstoff und
C) mindestens einem Additiv zur Verbesserung der Thermostabilität,
dadurch gekennzeichnet, daß die Formmasse als Additiv (C) zumindest
$c_1$) ein oder mehrere polymere Materialien, welche aus
$c_{11}$) 62 bis 88 Gew.-% an einpolymerisiertem Methyl-, Ethyl- und/oder n-Propylmethacrylat,
$c_{12}$) 2 bis 10 Gew.-% an einpolymerisiertem n-Propyl-, n-Butyl- und/oder Pentylacrylat und
$c_{13}$) 10 bis 28 Gew.-% an einpolymerisiertem Acrylamid und/oder Methacrylamid bestehen,
in einer Menge von 0,01 bis 20 Gew.-% bezogen auf die Formmasse, enthält.
2. Verstärkte oder unverstärkte Polyoxymethylen-Formmasse nach Anspruch 1, dadurch gekennzeichnet, daß die polymeren Materialien ($c_1$) Copolymerisate sind, welche aus
$c_{11}$) 62 bis 88 Gew.-% an einpolymerisiertem Methyl-, Ethyl- und/oder n-Propylmethacrylat,
$c_{12}$) 2 bis 10 Gew.-% an einpolymerisiertem n-Propyl-, n-Butyl- und/oder Pentylacrylat und
$c_{13}$) 10 bis 28 Gew.-% an einpolymerisiertem Acrylamid und/oder Methacrylamid bestehen.
3. Verstärkte oder unverstärkte Polyoxymethylen-Formmasse nach Anspruch 1, dadurch gekennzeichnet, daß die polymeren Materialien ($c_1$) Gemische sind, welche aus
$c_{11}$) 62 bis 88 Gew.-% an Homo- und/oder Copolymerisaten von Methyl-, Ethyl- und/oder n-Propylmethacrylat,
$c_{12}$) 2 bis 10 Gew.-% an Homo- und/oder Copolymerisaten von n-Propyl-, n-Butyl- und/oder n-Pentylacrylat

13

und

$c_{13}$) 10 bis 28 Gew.-% an Homo- und/oder Copolymerisaten von Acrylamid und/oder Methacrylamid bestehen.

4. Verstärkte oder unverstärkte Polyoxymethylen-Formmasse nach Anspruch 2, dadurch gekennzeichnet, daß die polymeren Materialien ($c_1$) Copolymerisate sind, welche aus

$c_{11}$) 70 bis 80 Gew.-% an einpolymerisiertem Methylmethacrylat,

$c_{12}$) 4 bis 6 Gew.-% an einpolymerisiertem n-Butylacrylat und

$c_{13}$) 16 bis 24 Gew.-% an einpolymerisiertem Methacrylamid

bestehen.

5. Verstärkte oder unverstärkte Polyoxymethylen-Formmasse nach Anspruch 4, dadurch gekennzeichnet, daß das polymere Material ($c_1$) ein Copolymerisat ist, welches aus

$c_{11}$) 75 Gew.-% an einpolymerisiertem Methylmethacrylat,

$c_{12}$) 5 Gew.-% an einpolymerisiertem n-Butylacrylat und

$c_{13}$) 20 Gew.-% an einpolymerisiertem Methacrylamid

besteht.

6. Verstärkte oder unverstärkte Polyoxymethylen-Formmasse nach Anspruch 3, dadurch gekennzeichnet, daß die polymeren Materialien ($c_1$) Gemische sind, welche aus

$c_{11}$) 70 bis 80 Gew.-% Polymethylmethacrylat,

$c_{12}$) 4 bis 6 Gew.-% Poly(n-butylacrylat) und

$c_{13}$) 16 bis 24 Gew.-% Polymethacrylamid

bestehen.

7. Verfahren zur Herstellung eines Formkörpers oder einer Folie aus einer Formmasse durch

(1) Aufschmelzen und Vermischen der Bestandteile der Formmasse auf einem Extruder bei 150 bis 260°C und

(2) formgebende Verarbeitung der hierdurch resultierenden Formmasse zu dem betreffenden Formkörper oder der betreffenden Folie,

dadurch gekennzeichnet, daß man hierbei eine Formmasse verwendet, welche eine verstärkte oder unverstärkte Polyoxymethylen-Formmasse gemäß einem der Ansprüche 1 bis 6 enthält oder welche aus einer solchen Formmasse besteht.

8. Verwendung eines polymeren Materials, welches aus

62 bis 88 Gew.-% an einpolymerisiertem Methyl-, Ethyl- und/oder n-Propylmethacrylat,

2 bis 10 Gew.-% an einpolymerisiertem n-Propyl-, n-Butyl- und/oder n-Pentylacrylat und

10 bis 28 Gew.-% an einpolymerisiertem Acrylamid und/oder Methacrylamid

besteht, für die thermische Stabilisierung von Formmassen, welche Polyoxymethylen-Homo- und/oder -Copolymerisate enthalten.

9. Verwendung von Copolymerisaten, welche aus

62 bis 88 Gew.-% an einpolymerisiertem Methyl-, Ethyl- und/oder n-Propylmethacrylat,

2 bis 10 Gew.-% an einpolymerisiertem n-Propyl-, n-Butyl- und/oder n-Pentylacrylat und

bis 28 Gew.-% an einpolymerisiertem Acrylamid und/oder Methacrylamid

bestehen, zur thermischen Stabilisierung von Formmassen, welche Polyoxymethylen-Homo- und/oder -Copolymerisate enthalten.

10. Verwendung von Gemischen, welche aus

62 bis 88 Gew.-% an Homo- und/oder Copolymerisaten von Methyl-, Ethyl- und/oder n-Propylmethacrylat,

2 bis 10 Gew.-% an Homo- und/oder Copolymerisaten von n-Propyl-, n-Butyl- und/oder n-Pentylacrylat und

10 bis 28 Gew-% an Homo- und/oder Copolymerisaten von Acrylamid und/oder Methacrylamid

bestehen, zur thermischen Stabilisierung von Formmassen, welche Polyoxymethylen-Homo- und/oder -Copolymerisate enthalten.